# EUROPEAN PATENT APPLICATION

(11) **EP 4 467 556 A1**
(43) Date of publication of application: **27.11.2024**
(21) Application number: 22919654.8
(22) Date of filing: 21.03.2022
(51) Int. Cl.: C07F 15/06, B01J 31/22, C08G 64/34

(54) **BINUCLEAR SCHIFF BASE COBALT COMPLEX, AND PREPARATION METHOD THEREFOR AND USE THEREOF**

(30) Priority: 17.01.2022 CN 202210048718
(71) Applicant: Changchun Institute of Applied Chemistry, Chinese Academy of Sciences, Changchun, Jilin 130022 (CN)
(72) Inventor: PANG, Xuan, Changchun City, Jilin 130022 (CN); ZHOU, Yanchuan, Changchun City, Jilin 130022 (CN); DUAN, Ranlong, Changchun City, Jilin 130022 (CN); SUN, Zhiqiang, Changchun City, Jilin 130022 (CN); CHEN, Xuesi, Changchun City, Jilin 130022 (CN)
(74) Representative: Zimmermann & Partner Patentanwälte mbB
(86) International application number: PCT/CN2022/081901
(87) International publication number: WO 2023/134011

(57) **Abstract**

The present disclosure provides a binuclear Schiff base-cobalt complex, a preparation method and use thereof, wherein the binuclear Schiff base-cobalt complex has a structure represented by Formula (I); in Formula (I), R₁ and R₂ are independently selected from a group consisting of hydrogen, nitro, cyano, a halogen, an aliphatic group, a substituted aliphatic group and an aryl group; X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions. As compared to the prior art, the present disclosure provides a binuclear Schiff base-cobalt complex having a structure represented by Formula (I) bridged by 2,3-dihydroxyterephthalaldehyde, which can catalyze copolymerization reaction of an epoxide, especially an epoxide with an electron-withdrawing group, with CO₂ to prepare a polycarbonate material. Further, multi-component polycarbonate materials having plentiful structures can be synthesized by adding a second component of epoxy monomer in the reaction system, and the molecular weight thereof may reach 44.4 kg/mol.

## Description

### TECHNICAL FIELD

The present disclosure relates to the technical field of polymer materials, and particularly to a binuclear Schiff base-cobalt complex and a preparation method thereof.

### BACKGROUND ART

Currently, the global production of polymer materials has exceeded 0.5 billion tons per year, and the products relate to various fields from aerospace, transportation to daily life. However, the production and use of large amounts of polymer materials also present serious resource and energy challenges. Therefore, the development of sustainable polymer materials by using renewable resources as raw materials may mitigate the problems of environment stress and resource shortage, where it has become a research focus to copolymerize CO₂ used as a C1 resource with epoxy compounds to synthesize biodegradable polycarbonate materials, and the synthesized materials exhibit excellent performances (such as biodegradability, biocompatibility and performance diversity) in the fields of packaging materials, adhesives, disposable medical materials, engineering materials and so on.

In the ring-opening copolymerization of epoxy compounds with CO₂, catalysts play an important role, involving issues such as catalytic activity, selectivity and segment regularity. Most of currently reported catalysts are used to catalyze the copolymerization reaction of alicyclic epoxides and terminal epoxides with an electron-donating group (such as propylene oxide (PO) and cyclohexene oxide (CHO)) with CO₂ to synthesize polycarbonate materials. However, the terminal epoxy compounds with an electron-withdrawing group (such as styrene oxide (SO)) are likely to undergo cycloaddition reaction to produce five-membered cyclic carbonates. Only a few catalytic systems can achieve copolymerization of SO and CO₂. Among them, the double metal cyanide complex (DMCC) heterogeneous catalysts can catalyze the copolymerization reaction of SO/CO₂ in a relatively wide temperature range (35-90°C), but there are disadvantages of high content of ether segment, low molecular weight, and wide molecular weight distribution. Schiff base-cobalt complexes can catalyze the copolymerization reaction of SO/CO₂ at room temperature, exhibiting high selectivity for carbonate unit.

### SUMMARY

In view of this, an object of the present disclosure is to provide a novel binuclear Schiff base-cobalt complex, a preparation method and use thereof. The complex can catalyze copolymerization reaction of an epoxide, especially an epoxide with an electron-withdrawing group, with CO₂ to prepare a polycarbonate material. Further, the multi-component polycarbonate materials having plentiful structures can be synthesized by adding a second component of epoxy monomer in the reaction system, and the molecular weight thereof may reach 44.4 kg/mol.

The present disclosure provides a binuclear Schiff base-cobalt complex having a structure represented by Formula (I): 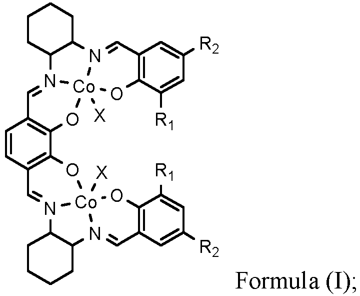
in Formula (I), R₁ and R₂ are independently selected from a group consisting of hydrogen, nitro, cyano, a halogen, an aliphatic group, a substituted aliphatic group and an aryl group;
X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions.

Preferably, the R₁ and R₂ are independently selected from a group consisting of -H, an aliphatic group having a carbon atom number of 1-10, -F, -Cl, Br or -NO₂.

The present disclosure further provides a preparation method of the binuclear Schiff base-cobalt complex as described in the above technical solutions, comprising steps of
a) reacting a compound having a structure represented by Formula (VI) with a compound having a structure represented by Formula (VII) to obtain a compound having a structure represented by Formula (V); 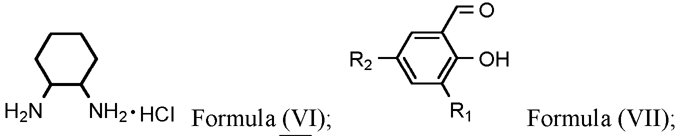 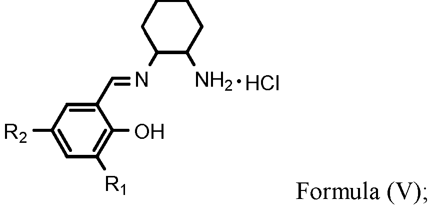
b) reacting a dialdehyde compound having a structure represented by Formula (IV) with the compound having a structure represented by Formula (V) to obtain a Schiff base ligand having a structure represented by Formula (III); 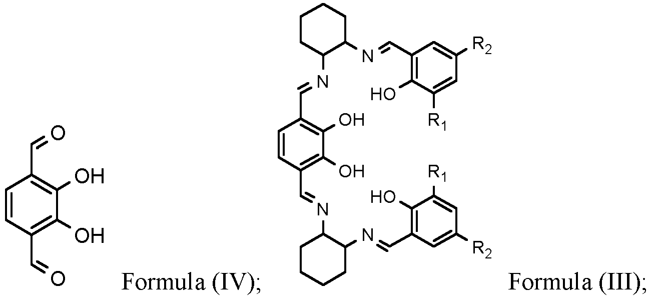
c) reacting the Schiff base ligand having a structure represented by Formula (III) with a cobalt compound in a solvent to obtain a divalent cobalt complex having a structure represented by Formula (II); 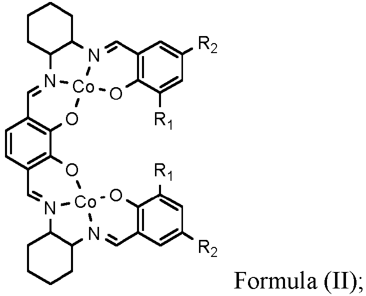 and
d) reacting the divalent cobalt complex having a structure represented by Formula (II) with a compound containing an X anion in a solvent to obtain the binuclear Schiff base-cobalt complex having a structure represented by Formula (I).

Preferably, the cobalt compound in Step c) is one or more selected from a group consisting of cobalt dichloride, cobalt acetate, and cobalt nitrate.

Preferably, in step c), a molar ratio of the Schiff base ligand having a structure represented by Formula (III) to the cobalt compound is 1: (1.5-2.5).

Preferably, in step d), a molar ratio of the divalent cobalt complex having a structure represented by Formula (II) to the X anion in the compound containing an X anion is 1: (1.5-2.5).

The present disclosure further provides a method for preparing a polycarbonate material through copolymerization reaction of an epoxide/CO₂ catalyzed by a binuclear Schiff base-cobalt complex, comprising a step of copolymerizing the epoxide and CO₂ under an action of a catalyst and a cocatalyst to obtain the polycarbonate material, wherein the catalyst is the binuclear Schiff base-cobalt complex as described in the above technical solutions.

Preferably, the cocatalyst is one or more selected from a group consisting of bis(triphenylphosphine)ammonium chloride, 4-dimethylaminopyridine, 1,8-diazabicyclo[5.4.0]undec-7-ene, 1,5,7-triazabicyclo[4.4.0]dec-5-ene, N-methylimidazole, tricyclohexylphosphine, tetrabutylammonium chloride and tetrabutylammonium bromide.

Preferably, a molar ratio of the catalyst to the cocatalyst is 1: (1-4); and
a molar ratio of a total of the catalyst and the cocatalyst to the epoxide is 1: (100-5000).

Preferably, the CO₂ has a pressure of 0.1 MPa-5 MPa; and
the copolymerization reaction is carried out at a temperature of 20°C-80°C for a duration of 0.5 h-48 h.

The present disclosure provides a binuclear Schiff base-cobalt complex, a preparation method and use thereof, wherein the binuclear Schiff base-cobalt complex has a structure represented by Formula (I): 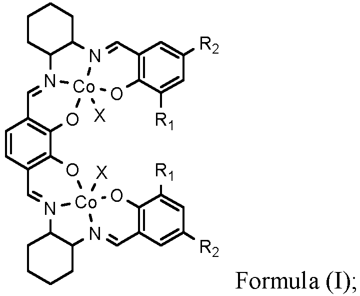 in Formula (I), R₁ and R₂ are independently selected from a group consisting of hydrogen, nitro, cyano, a halogen, an aliphatic group, a substituted aliphatic group and an aryl group; X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions. As compared to the prior art, the present disclosure provides a binuclear Schiff base-cobalt complex having a structure represented by Formula (I) bridged by 2,3-dihydroxyterephthalaldehyde, which can catalyze copolymerization reaction of an epoxide, especially an epoxide with an electron-withdrawing group, with CO₂ to prepare a polycarbonate material. Further, the multi-component polycarbonate materials having plentiful structures can be synthesized by adding a second component of epoxy monomer in the reaction system, and the molecular weight thereof may reach 44.4 kg/mol.

In addition, the preparation method provided in the present disclosure have advantages of simple and clear reaction route, low energy consumption, high product yield, good quality, and is safe and easy to industrialize, and has a wide range of application prospects.

### DESCRIPTION OF DRAWINGS

None.

### DESCRIPTION OF EMBODIMENTS

The technical solutions of the present disclosure will be clearly and completely described below with reference to the embodiments of the present disclosure. Obviously, the embodiments described are only a part of, but not all of the embodiments of the present disclosure. All other embodiments obtained by those skilled in the art based on the embodiments described, without inventive efforts, fall within the protection scope of the present disclosure.

The present disclosure provides a binuclear Schiff base-cobalt complex having a structure represented by Formula (I): 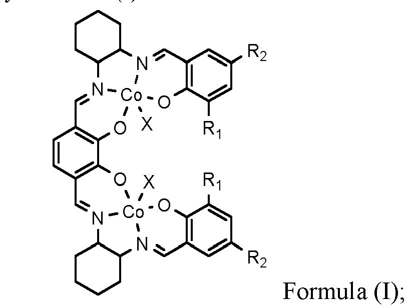
in Formula (I), R₁ and R₂ are independently selected from a group consisting of hydrogen, nitro, cyano, a halogen, an aliphatic group, a substituted aliphatic group and an aryl group;
X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions.

The present disclosure provides a binuclear Schiff base-cobalt complex, a preparation method and a method for preparing a polycarbonate material with a catalyst; wherein the binuclear Schiff base-cobalt complex has a structure represented by Formula (I): 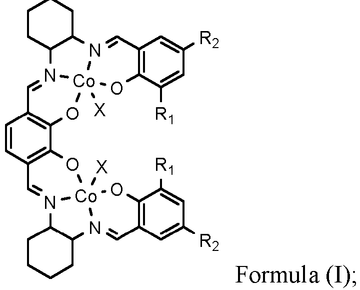
in Formula (I), R₁ and R₂ are independently selected from a group consisting of hydrogen, nitro, cyano, a halogen, an aliphatic group, a substituted aliphatic group and an aryl group; preferably, the R₁ and R₂ are independently selected from a group consisting of -H, an aliphatic group having a carbon atom number of 1-10, -F, -Cl, Br and -NO₂; more preferably, the R₁ and R₂ are independently selected from a group consisting of -H, -CH₃, -CH₂CH₃, -CH(CH₃)₂, -C(CH₃)₃, -F, -Cl and -Br.
X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions or the like, and is preferably -Cl, -NO₃, -CH₃COO or 2,4-dinitrophenoxy anion.

The present disclosure provides a binuclear Schiff base-cobalt complex having a structure represented by Formula (I) bridged by 2,3-dihydroxyterephthalaldehyde, which can catalyze copolymerization reaction of an epoxide, especially an epoxide with an electron-withdrawing group, with CO₂ to prepare a polycarbonate material. Further, multi-component polycarbonate materials having plentiful structures can be synthesized by adding a second component of epoxy monomer in the reaction system, and the molecular weight thereof may reach 44.4 kg/mol.

The present disclosure further provides a method for preparing the binuclear Schiff base-cobalt complex as described in the above technical solutions, comprising steps of
a) reacting a compound having a structure represented by Formula (VI) with a compound having a structure represented by Formula (VII) to obtain a compound having a structure represented by Formula (V); 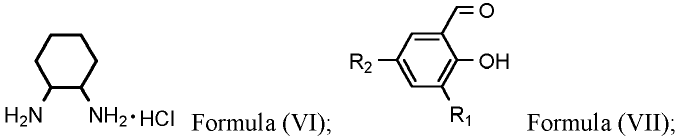 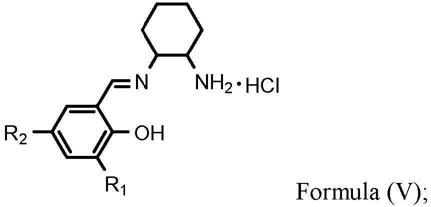
b) reacting a dialdehyde compound having a structure represented by Formula (IV) with the compound having a structure represented by Formula (V) to obtain a Schiff base ligand having a structure represented by Formula (III); 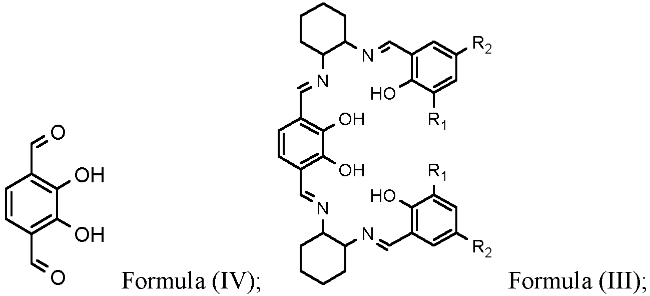
c) reacting the Schiff base ligand having a structure represented by Formula (III) with a cobalt compound in a solvent to obtain a divalent cobalt complex having a structure represented by Formula (II); 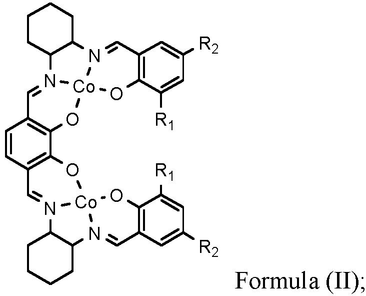 and
d) reacting the divalent cobalt complex having a structure represented by Formula (II) with a compound containing an X anion in a solvent to obtain the binuclear Schiff base-cobalt complex having a structure represented by Formula (I).

In the present disclosure, firstly, a compound having a structure represented by Formula (VI) is reacted with a compound having a structure represented by Formula (VII) to obtain a compound having a structure represented by Formula (V). In the present disclosure, the sources of the compound having a structure represented by Formula (VI) and the compound having a structure represented by Formula (VII) are not particularly limited, and any self-made product or commercial product well known for those skilled in the art may be used.

In the present disclosure, the compound having a structure represented by Formula (VI) and the compound having a structure represented by Formula (VII) used as raw materials are reacted in an organic solvent to obtain the compound having a structure represented by Formula (V); in Formula (VII), R₁ and R₂ are independently selected from a group consisting of hydrogen, nitro, cyano, a halogen, an aliphatic group, a substituted aliphatic group and an aryl group; preferably, the R₁ and R₂ are independently selected from a group consisting of -H, an aliphatic group having a carbon atom number of 1-10, -F, -Cl, Br and -NO₂; more preferably, the R₁ and R₂ are independently selected from a group consisting of -H, -CH₃, -CH₂CH₃, -CH(CH₃)₂, -C(CH₃)₃, -F, -Cl and -Br.

In the present disclosure, the solvent is preferably an organic solvent, and the organic solvent is preferably an alcohol solvent, a hydrocarbon solvent, an aromatic solvent or a halogenated hydrocarbon solvent, which is not particularly limited in the present disclosure.

In the present disclosure, after obtaining the compound having a structure represented by Formula (V), a dialdehyde compound having a structure represented by Formula (IV) is reacted with the compound having a structure represented by Formula (V) to obtain a Schiff base ligand having a structure represented by Formula (III). In the present disclosure, the source of the dialdehyde compound having a structure represented by Formula (IV) is not particularly limited, and any self-made product or commercial product well known for those skilled in the art may be used.

In the present disclosure, the dialdehyde compound having a structure represented by Formula (IV) and the compound having a structure represented by Formula (V) used as raw materials are reacted in an organic solvent to obtain the Schiff base ligand having a structure represented by Formula (III); in Formula (V), R₁ and R₂ are independently selected from a group consisting of hydrogen, nitro, cyano, a halogen, an aliphatic group, a substituted aliphatic group and an aryl group; preferably, the R₁ and R₂ are independently selected from a group consisting of -H, an aliphatic group having a carbon atom number of 1-10, -F, -Cl, Br and -NO₂; more preferably, the R₁ and R₂ are independently selected from a group consisting of -H, -CH₃, -CH₂CH₃, -CH(CH₃)₂, -C(CH₃)₃, -F, -Cl and -Br.

In the present disclosure, after obtaining the Schiff base ligand having a structure represented by Formula (III), the Schiff base ligand having a structure represented by Formula (III) is reacted with a cobalt compound in a solvent to obtain a divalent cobalt complex having a structure represented by Formula (II).

In the present disclosure, the cobalt compound is preferably one or more selected from a group consisting of cobalt dichloride, cobalt acetate, and cobalt nitrate, and more preferably cobalt acetate. In the present disclosure, the source of the cobalt compound is not particularly limited, and any self-made product or commercial product well known for those skilled in the art may be used.

In the present disclosure, a molar ratio of the Schiff base ligand having a structure represented by Formula (III) to the cobalt compound is 1: (1.5-2.5), and more preferably 1:2.

In the present disclosure, the Schiff base ligand having a structure represented by Formula (III) and the cobalt compound used as raw materials are reacted in an organic solvent to obtain the divalent cobalt complex having a structure represented by Formula (II); in Formula (III), R₁ and R₂ are independently selected from a group consisting of hydrogen, nitro, cyano, a halogen, an aliphatic group, a substituted aliphatic group and an aryl group; preferably, the R₁ and R₂ are independently selected from a group consisting of -H, an aliphatic group having a carbon atom number of 1-10, -F, -Cl, Br and -NO₂; more preferably, the R₁ and R₂ are independently selected from a group consisting of -H, -CH₃, -CH₂CH₃, -CH(CH₃)₂, -C(CH₃)₃, -F, -Cl and -Br.

In the present disclosure, after obtaining the divalent cobalt complex having a structure represented by Formula (II), the divalent cobalt complex having a structure represented by Formula (II) is reacted with a compound containing an X anion in a solvent to obtain the binuclear Schiff base-cobalt complex having a structure represented by Formula (I). In the present disclosure, the sources of the compound containing an X anion and the solvent are not particularly limited, and any self-made product or commercial product well known for those skilled in the art may be used.

In the present disclosure, a molar ratio of the divalent cobalt complex having a structure represented by Formula (II) to the X anion in the compound containing an X anion is preferably 1: (1.5-2.5), and more preferably 1:2.

In the present disclosure, the divalent cobalt complex having a structure represented by Formula (II) and the compound containing an X anion used as raw materials are reacted in a solvent to obtain the binuclear Schiff base-cobalt complex having a structure represented by Formula (I); in Formula (I), R₁ and R₂ are independently selected from a group consisting of hydrogen, nitro, cyano, a halogen, an aliphatic group, a substituted aliphatic group and an aryl group; preferably, the R₁ and R₂ are independently selected from a group consisting of -H, an aliphatic group having a carbon atom number of 1-10, -F, -Cl, Br and -NO₂; more preferably, the R₁ and R₂ are independently selected from a group consisting of -H, -CH₃, -CH₂CH₃, -CH(CH₃)₂, -C(CH₃)₃, -F, -Cl and -Br.

The preparation method provided in the present disclosure have advantages of simple and clear reaction route, low energy consumption, high product yield, good quality, and is safe and easy to industrialize, and has a wide range of application prospects.
The present disclosure also provides a method for preparing a polycarbonate material through copolymerization reaction of an epoxide/CO₂ catalyzed by a binuclear Schiff base-cobalt complex, comprising a step of copolymerizing the epoxide and CO₂ under an action of a catalyst and a cocatalyst to obtain the polycarbonate material, wherein the catalyst is the binuclear Schiff base-cobalt complex as described in the above technical solutions.

In the present disclosure, an epoxide and CO₂ are reacted under an action of a catalyst and a cocatalyst to obtain a polycarbonate material; wherein the catalyst is the binuclear Schiff base-cobalt complex as described in the above technical solutions.

In the present disclosure, the catalyzed copolymerization reaction of the epoxide and CO₂ is preferably carried out under anhydrous and oxygen-free conditions. Preferably, the epoxide, the catalyst and the cocatalyst are mixed and added into an autoclave which has been dehydrated and deoxygenated at high temperature, and then CO₂ is introduced into the autoclave for reaction.

In the present disclosure, the epoxide is preferably one or more selected from a group consisting of styrene oxide, propylene oxide, butylene oxide, cyclohexene oxide, allyl glycidyl ether and cyclohexyl ethylene oxide. In the present disclosure, the source of the epoxide is not particularly limited, and any self-made product or commercial product well known for those skilled in the art may be used.

In the present disclosure, the cocatalyst is preferably one or more selected from a group consisting of bis(triphenylphosphine)ammonium chloride (PPNCl), 4-dimethylaminopyridine (DMAP), 1,8-diazabicyclo[5.4.0]undec-7-ene, 1,5,7-triazabicyclo[4.4.0]dec-5-ene, N-methylimidazole, tricyclohexylphosphine, tetrabutylammonium chloride and tetrabutylammonium bromide, more preferably PPNCl and/or DMAP, and further more preferably PPNCI. In the present disclosure, the source of the cocatalyst is not particularly limited, and any self-made product or commercial product well known for those skilled in the art may be used.

In the present disclosure, a molar ratio of the catalyst to the cocatalyst is preferably 1: (1-4).

In the present disclosure, a molar ratio of a total of the catalyst and the cocatalyst to the epoxide is preferably 1: (100-5000).

In the present disclosure, the CO₂ preferably has a pressure of 0.1 MPa-5 MPa.

In the present disclosure, the copolymerization reaction is preferably carried out at a temperature of 20°C-80°C for a duration of 0.5 h-48 h.

In the present disclosure, the binuclear Schiff base-cobalt complex obtained is used together with the cocatalyst to catalyze the copolymerization reaction of the epoxide and CO₂ to obtain the polycarbonate material.

The present disclosure provides a binuclear Schiff base-cobalt complex, a preparation method and use thereof, wherein the binuclear Schiff base-cobalt complex has a structure represented by Formula (I): 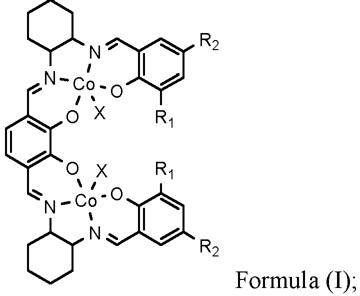 in Formula (I), R₁ and R₂ are independently selected from a group consisting of hydrogen, nitro, cyano, a halogen, an aliphatic group, a substituted aliphatic group and an aryl group; X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions. As compared to the prior art, the present disclosure provides a binuclear Schiff base-cobalt complex having a structure represented by Formula (I) bridged by 2,3-dihydroxyterephthalaldehyde, which can catalyze copolymerization reaction of an epoxide, especially an epoxide with an electron-withdrawing group, with CO₂ to prepare a polycarbonate material. Further, multi-component polycarbonate materials having plentiful structures can be synthesized by adding a second component of epoxy monomer in the reaction system, and the molecular weight thereof may reach 44.4 kg/mol.

In addition, the preparation method provided in the present disclosure have advantages of simple and clear reaction route, low energy consumption, high product yield, good quality, and is safe and easy to industrialize, and has a wide range of application prospects.

In order to further explain the present disclosure, the binuclear Schiff base-cobalt complex, the preparation method and the catalyzed copolymerization reaction of an epoxide and CO₂ provided in the present disclosure will be described in detail below. All materials used in the following examples of the present disclosure are commercial products.

### Example 1

Under the atmosphere of N₂, a 22.5 mL solution of HCl in methanol (2.0 M, 45 mmol) was slowly added dropwise into a solution of 1,2-cyclohexanediamine (5.7 g, 50 mmol) in diethyl ether (300 mL). The mixture was stirred overnight at room temperature. The resultant solid was collected through filtration, and dried in vacuum to obtain a compound (VI).

### Example 2

1,2-cyclohexanediamine monohydrochloride (VI) (3 g, 20 mmol) and 3,5-di-tert-butyl salicylaldehyde (4.92 g, 21 mmol) having a structure represented by Formula (VII) were sequentially added into 100 mL methanol. The mixture was stirred at room temperature for 4 h, and rotated in vacuum to remove the methanol solvent. Then, 150 mL diethyl ether was added, and the mixture was vigorously stirred for 2 h. The resultant white product was filtered in vacuum and dried to obtain a compound having a structure represented by Formula (V).

The compound prepared in this example has a structure represented by Formula (V), wherein both R₁ and R₂ are tert-butyl.

### Example 3

A compound (V) was prepared by the preparation method of Example 2, except that in this example, 3-tert-butyl salicylaldehyde was used in place of 3,5-di-tert-butyl salicylaldehyde in Example 2.

The compound prepared in this example has a structure represented by Formula (V), wherein R₁ is tert-butyl, and R₂ is hydrogen.

### Example 4

Under the atmosphere of N₂, a 91 mL solution of n-butyl lithium in hexane (2.2 M, 200 mmol) was slowly added dropwise into a solution of 1,2-dimethoxybenzene (5.52 g, 40 mmol) and N,N,N',N'-tetramethylethylenediamine (30 mL, 200 mmol) in diethyl ether (150 mL). Then, the reaction solution was heated under reflux for reaction for 16 h. After the reaction solution was cooled to room temperature, N,N-dimethylformamide (17.2 mL, 220 mmol) was slowly added dropwise, and the mixture was stirred overnight at room temperature. Then, 200 mL water was added to quench the reaction. The reaction mixture was extracted with dichloromethane. The organic layer was dried over anhydrous sodium sulfate and rotated to remove the solvent. The crude product was purified by column chromatography to obtain 2,3-dimethoxy-1,4-dibenzaldehyde.

Under the atmosphere of N₂, boron tribromide (8 mL, 85 mmol) was slowly added dropwise into a solution of 2,3-dimethoxy-1,4-dibenzaldehyde (3.88 g, 20 mmol) in dichloromethane (150 mL). The mixture was stirred at room temperature for 4 h, then supplemented with 150 mL water, and stirred overnight. The liquid was separated into phases, and the aqueous phase was extracted, and the organic phases were combined. The combined organic phase was dried over anhydrous sodium sulfate, and rotated to remove the solvent. The crude product was purified through dichloromethane/n-hexane recrystallization to obtain a compound having a structure represented by Formula (IV).

### Example 5

Under the atmosphere of N₂, 0.332 g of the compound preprared in Example 4 and 1.464 g of the compound preprared in Example 2 were added into 50 mL tetrahydrofuran, and then 0.404 g triethylamine was slowly added dropwise. The mixture was stirred at room temperature for 2 h, and then rotated in vacuum to remove the solvent. The crude product was purified by column chromatography to obtain a Schiff base compound having a structure represented by Formula (III), wherein both R₁ and R₂ are tert-butyl.

H-NMR spectrum of the Schiff base ligand obtained: ¹H NMR (300 MHz, CDCl₃): δ 13.64 (4H), 8.28 (4H), 7.30 (2H), 6.96 (2H), 6.60 (2H), 3.32 (4H), 1.92-1.45 (16H), 1.41 (9H), 1.39 (9H), 1.25 (9H), 1.19 (9H).

### Example 6

A Schiff base compound was prepared by the preparation method of Example 5, except that in this example, the compound prepared in Example 3 was used in place of the compound prepared in Example 2 to obtain a Schiff base ligand having a structure represented by Formula (III), wherein R₁ is tert-butyl, and R₂ is hydrogen.

H-NMR spectrum of the Schiff base ligand obtained: ¹H NMR (300 MHz, CDCl3):δ 13.71 (4H), 8.23 (4H), 7.23 (2H), 7.01 (2H), 6.74 (2H), 6.57 (2H), 3.31 (4H), 2.04-1.42 (16H), 1.39 (9H), 1.37 (9H).

### Example 7

Under the atmosphere of N₂, a solution of cobalt acetate in methanol (0.2 M, 10 mL, 2 mmol) was slowly added dropwise into a solution of the Schiff base ligand prepared in Example 5 in dichloromethane (10 mL). The mixture was stirred at room temperature for 2 h. The resultant solid was separated through filtration and dried in vacuum to obtain a divalent cobalt complex having a structure represented by Formula (II), wherein both R₁ and R₂ are tert-butyl.

### Example 8

A divalent cobalt complex was prepared by the preparation method of Example 7, except that in this example, the Schiff base ligand prepared in Example 6 was used in place of the Schiff base ligand prepared in Example 5 to obtain a divalent cobalt complex having a structure represented by Formula (II), wherein R₁ is tert-butyl, and R₂ is hydrogen.

### Example 9

0.905 g of the divalent cobalt complex prepared in Example 7 and 0.368 g of 2,4-dinitrophenol were dissolved in 20 mL dichloromethane. The mixture was stirred for reaction for 1 h with oxygen bubbling, and then rotated in vacuum to remove the solvent to obtain a binuclear Schiff base-cobalt complex having a structure represented by Formula (I), wherein both R₁ and R₂ are tert-butyl.

### Example 10

A binuclear Schiff base-cobalt complex was prepared by the preparation method of Example 9, except that in this example, acetic acid was used in place of 2,4-dinitrophenol to obtain a binuclear Schiff base-cobalt complex having a structure represented by Formula (I), wherein both R₁ and R₂ are tert-butyl.

### Example 11

A binuclear Schiff base-cobalt complex was prepared by the preparation method of Example 9, except that in this example, the divalent cobalt complex prepared in Example 8 was used in place of the divalent cobalt complex prepared in Example 7 to obtain a binuclear Schiff base-cobalt complex having a structure represented by Formula (I), wherein R₁ is tert-butyl, and R₂ is hydrogen.

### Example 12

A binuclear Schiff base-cobalt complex was prepared by the preparation method of Example 9, except that in this example, the divalent cobalt complex prepared in Example 8 was used in place of the divalent cobalt complex prepared in Example 7 and acetic acid was used in place of 2,4-dinitrophenol to obtain a binuclear Schiff base-cobalt complex having a structure represented by Formula (I), wherein R₁ is tert-butyl, and R₂ is hydrogen.

### Example 13

A method of catalyzing copolymerization reaction of an epoxide/CO₂ with the binuclear Schiff base-cobalt complex:
Under the atmosphere of N₂, weighed catalyst, cocatalyst and epoxy monomer were sequentially added into a 25 mL autoclave. The autoclave was sealed, filled with CO₂ at an appropriate pressure, and placed in an oil bath at a preset temperature to react for a predetermined time. After the reaction was completed, the CO₂ gas was slowly released, and a small amount of the reaction solution was dissolved in deuterated chloroform to characterize the monomer conversion and the reaction selectivity. The reaction mixture was dissolved in dichloromethane, the solution was slowly dripped into acidified methanol, and a polycarbonate material was immediately precipitated. The polymer was dried in vacuum at 40°C, and then characterized by GPC for the molecular weight and molecular weight distribution of the material.

The reaction equation is as follows:

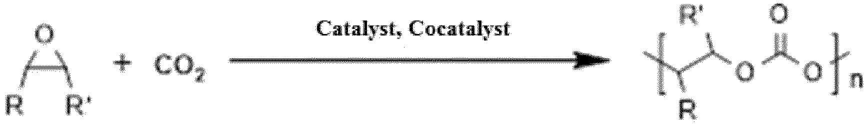

The experimental data are as shown in Table 1.

**Table 1. The experimental data for the method of catalyzing copolymerization reaction of an epoxide/CO₂ with the binuclear Schiff base-cobalt complexes provided in Examples 14-23**

| Ex. | Binuclear Schiff base-cobalt complexes | Cocatalyst | Epoxide | Ratio ^{[a]} | Reaction temperature (°C) | Time (h) | Conversi on (%) ^{[b]} | Selectivity (%) ^{[b]} | Molecular weight (kg/mol) ^{[c]} | Molecular weight distribution ^{[c]} |
|---|---|---|---|---|---|---|---|---|---|---|
| 14 | Example 9 | PPNCl | SO | 1:2:250 | 60 | 2 | 56 | 62 | 4.2 | 1.24 |
| 15 | Example 9 | DMAP | SO | 1:2:500 | 25 | 4 | 68 | 84 | 7.2 | 1.28 |
| 16 | Example 9 | PPNCl | SO | 1:1:500 | 25 | 6 | 68 | 96 | 13.8 | 1.16 |
| 17 | Example 10 | PPNCl | SO | 1:2:500 | 25 | 4 | 54 | 82 | 6.2 | 1.24 |
| 18 | Example 9 | PPNCl | SO | 1:2:1500 | 25 | 48 | 84 | 91 | 44.4 | 1.20 |
| 19 | Example 11 | DMAP | SO | 1:2:500 | 25 | 6 | 56 | 84 | 8.8 | 1.19 |
| 20 | Example 12 | PPNCl | PO | 1:2:1000 | 60 | 1 | 75 | 94 | 23.4 | 1.23 |
| 21 | Example 9 | PPNCl | SO+ PO | 1:2:(500+500) | 25 | 36 | 78,2 | 96,98 | 28.9 | 1.16 |
| 22 | Example 10 | PPNCl | SO+ CHEO | 1:2:(1000+200) | 25 | 36 | 64,57 | 86,92 | 22.3 | 1.18 |
| 23 | Example 9 | PPNCl | SO+ AGE | 1:2:(500+500) | 25 | 36 | 69,79 | 91,86 | 17.1 | 1.15 |

| | | | | | | | | | | |
|---|---|---|---|---|---|---|---|---|---|---|
| Note: [a] Mole ratio: binuclear salen-Co(X): cocatalyst: epoxide. [b] Determined by 1H NMR. [c] Determined by GPC, calibrated by using polystyrene standards. | | | | | | | | | | |

### Epoxy monomers:

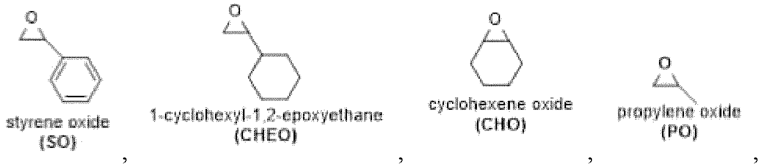

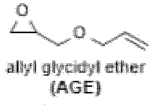

As can be seen from the above Examples, the present disclosure provides a binuclear Schiff base-cobalt complex having a structure represented by Formula (I) bridged by 2,3-dihydroxyterephthalaldehyde, which can catalyze copolymerization reaction of an epoxide, especially an epoxide with an electron-withdrawing group, with CO₂ to prepare a polycarbonate material. Further, multi-component polycarbonate materials having plentiful structures can be synthesized by adding a second component of epoxy monomer in the reaction system, and the molecular weight thereof may reach 44.4 kg/mol.

The above description of the embodiments as disclosed will enable those skilled in the art to achieve or implement the present disclosure. Various modifications on the embodiments will be obvious for those skilled in the art. The general principle as defined herein can be achieved in other embodiments without departing from the spirit or scope of the present disclosure. Therefore, the present invention is not limited to the embodiments as presented herein, and should construed as the broadest scope in accordance with the principle and novel features as disclosed herein.

## Claims

1. A binuclear Schiff base-cobalt complex having a structure represented by Formula (I): 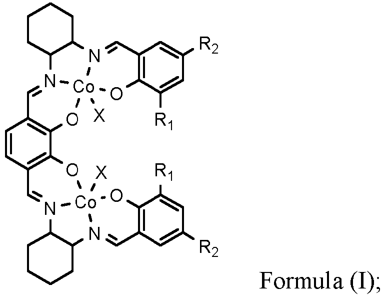
in Formula (I), R₁ and R₂ are independently selected from a group consisting of hydrogen, nitro, cyano, a halogen, an aliphatic group, a substituted aliphatic group and an aryl group;
X is selected from a group consisting of -F, -Cl, -Br, -I, -NO₃, -CH₃COO, -CCl₃COO, -CF₃COO, -ClO₄, p-methylbenzoate, p-toluenesulfonate, 2,4-dinitrophenoxy, 3,5-dinitrophenoxy, p-nitrophenoxy and o-nitrophenoxy anions.

2. The binuclear Schiff base-cobalt complex according to claim 1, **characterized in that** the R₁ and R₂ are independently selected from a group consisting of -H, an aliphatic group having a carbon atom number of 1-10, -F, -Cl, Br or -NO₂.

3. A preparation method of the binuclear Schiff base-cobalt complex according to any one of claims 1-2, comprising steps of:
a) reacting a compound having a structure represented by Formula (VI) with a compound having a structure represented by Formula (VII) to obtain a compound having a structure represented by Formula (V); 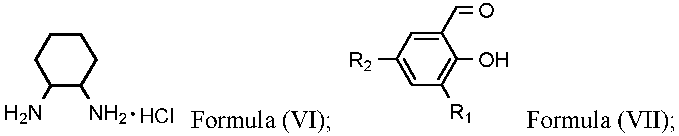 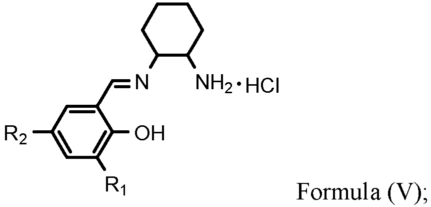
b) reacting a dialdehyde compound having a structure represented by Formula (IV) with the compound having a structure represented by Formula (V) to obtain a Schiff base ligand having a structure represented by Formula (III); 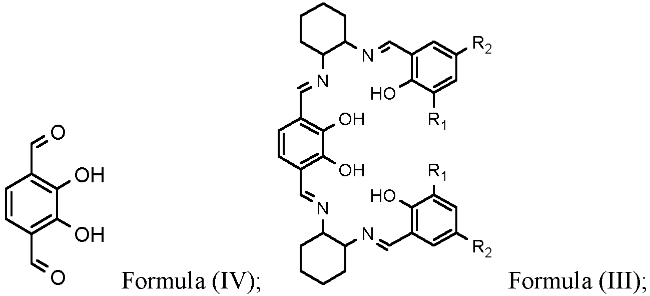
c) reacting the Schiff base ligand having a structure represented by Formula (III) with a cobalt compound in a solvent to obtain a divalent cobalt complex having a structure represented by Formula (II); 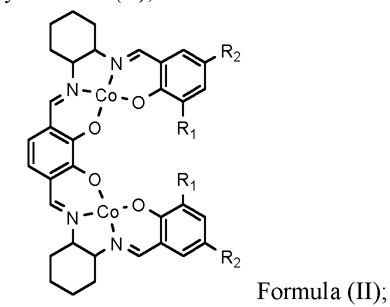 and
d) reacting the divalent cobalt complex having a structure represented by Formula (II) with a compound containing an X anion in a solvent to obtain the binuclear Schiff base-cobalt complex having a structure represented by Formula (I).

4. The preparation method according to claim 3, **characterized in that** the cobalt compound in Step c) is one or more selected from a group consisting of cobalt dichloride, cobalt acetate, and cobalt nitrate.

5. The preparation method according to claim 3, **characterized in that** in step c), a molar ratio of the Schiff base ligand having a structure represented by Formula (III) to the cobalt compound is 1: (1.5-2.5).

6. The preparation method according to claim 3, **characterized in that** in step d), a molar ratio of the divalent cobalt complex having a structure represented by Formula (II) to the X anion in the compound containing an X anion is 1: (1.5-2.5).

7. A method for preparing a polycarbonate material through copolymerization reaction of an epoxide/CO₂ catalyzed by a binuclear Schiff base-cobalt complex, comprising a step of copolymerizing the epoxide and CO₂ under an action of a catalyst and a cocatalyst to obtain the polycarbonate material, wherein the catalyst is the binuclear Schiff base-cobalt complex according to any one of claims 1-2.

8. The method according to claim 7, **characterized in that** the cocatalyst is one or more selected from a group consisting of bis(triphenylphosphine) ammonium chloride, 4-dimethylaminopyridine, 1,8-diazabicyclo[5.4.0]undec-7-ene, 1,5,7-triazabicyclo[4.4.0]dec-5-ene, N-methylimidazole, tricyclohexylphosphine, tetrabutylammonium chloride and tetrabutylammonium bromide.

9. The method according to claim 7, **characterized in that** a molar ratio of the catalyst to the cocatalyst is 1: (1-4); and
a molar ratio of a total of the catalyst and the cocatalyst to the epoxide is 1: (100-5000).

10. The method according to claim 7, **characterized in that** the CO₂ has a pressure of 0.1 MPa-5 MPa; and
the copolymerization reaction is carried out at a temperature of 20°C-80°C for a duration of 0.5 h-48 h.
